# EUROPÄISCHE PATENTSCHRIFT

(11) **EP 3 371 733 B1**
(45) Veröffentlichungstag und Bekanntmachung des Hinweises auf die Patenterteilung: **27.10.2021**
(21) Anmeldenummer: 17703052.5
(22) Anmeldetag: 25.01.2017
(51) Int. Cl.: G09C 1/00, G06F 21/71, G06F 12/14, H04L 9/08

(54) **VERSCHLÜSSELN DES SPEICHERINHALTS EINES SPEICHERS IN EINEM EINGEBETTETEN SYSTEM**
ENCRYPTING THE MEMORY CONTENT OF A MEMORY IN AN EMBEDDED SYSTEM
CHIFFREMENT DU CONTENU D'UNE MÉMOIRE DANS UN SYSTÈME INTÉGRÉ

(30) Priorität: 03.02.2016 DE 102016201665
(43) Veröffentlichungstag der Anmeldung: 12.09.2018
(73) Patentinhaber: Siemens Aktiengesellschaft, 80333 München (DE)
(72) Erfinder: HINTERSTOISSER, Thomas, 2102 Bisamberg (AT); MATSCHNIG, Martin, 3430 Tulln (AT)
(74) Vertreter: Maier, Daniel Oliver
(86) Internationale Anmeldenummer: PCT/EP2017/051501
(87) Internationale Veröffentlichungsnummer: WO 2017/133939

(56) Entgegenhaltungen:
- US-A1- 2010 176 920
- US-A1- 2010 199 103
- US-A1- 2015 234 751
- US-A1- 2016 364 583

## Beschreibung

### Technisches Gebiet

Die Erfindung bezieht sich auf ein Verfahren zum Verschlüsseln des Speicherinhalts eines Speichers in einem eingebetteten System, wobei unter Verwendung einer physikalischen unklonbaren Funktion sowie eines Fuzzy Key Extractors des eingebetteten Systems ein geheimer Schlüssel erzeugt wird. Weiters umfasst die Erfindung ein entsprechendes Computersystem sowie ein entsprechendes Computerprogrammprodukt.

Das erfindungsgemäße Verfahren ist dazu geeignet, in sicherheitsrelevanten eingebetteten Systemen (embedded systems) eingesetzt zu werden. Ein eingebettetes System bezeichnet einen elektronischen Rechner oder Computer, der in einen technischen Kontext eingebunden (eingebettet) ist. Dabei übernimmt der Rechner etwa Überwachungs-, Steuerungsoder Regelfunktionen oder ist für eine Form der Daten- bzw. Signalverarbeitung zuständig. Meist wird dabei eine gemischte Hardware-Software-Implementierung gewählt, welche die große Flexibilität von Software mit der Leistungsfähigkeit der Hardware vereint. Die Software dient dabei sowohl zur Steuerung des eingebetteten Systems selbst als auch gegebenenfalls zur Interaktion des eingebetteten Systems mit der Außenwelt über definierte Schnittstellen oder Protokolle.

### Stand der Technik

In modernen sicherheitskritischen Anwendungen stellen sogenannte Seitenkanalattacken (SCA, Side Channel Attacks), bzw. Differential Power Analysis (DPA) Angriffe eine immer größere Gefahr dar. Im Prinzip wird dabei die Leistungsaufnahme eines Computersystems über eine große Anzahl von Zyklen aufgezeichnet, um daraus Rückschlüsse auf den inneren Ablauf zu ziehen. Durch diese Vorgangsweise können z.B. kryptografische Schlüssel gefunden werden. Ob, bzw. wie leicht ein Angreifer mit SCA zum Ziel kommen kann, ist abhängig von der physikalischen Implementierung einer kryptographischen Funktion.

Nicht nur in diesem Zusammenhang gibt es einen wachsenden Bedarf für den Schutz von vertraulichem Speicherinhalt in eingebetteten Systemen. Andererseits begrenzen die Leistungsanforderungen an das eingebettete System, bzw. eine begrenzte, für das eingebettete System zur Verfügung stehende Leistung die Verwendung einer starken Verschlüsselung für den Schutz des Speicherinhalts.

Einen Überblick über bestehende Mechanismen zur Verschlüsselung von Speicherinhalt findet sich in "Memory encryption: A survey of existing techniques", ACM Comput. Surv., Vol. 46, Nr. 4, März 2014, Seiten 1-26. Die meisten Mechanismen sind darauf ausgerichtet, die Stärke der Verschlüsselung zu steigern. Dabei muss in der Regel ein Kompromiss eingegangen werden zwischen effektivem Speicherschutz und dem sogenannten Overhead für diesen Speicherschutz (also etwa Hardware, Software, Rechenzeit).

Die vorliegende Erfindung nutzt die bekannte Verwendung einer physikalischen unklonbaren Funktion gemeinsam mit einem sogenannten Fuzzy (Key) Extractor zur Erzeugung eines geheimen Schlüssels. Die Funktion von Fuzzy Extractors ist beschrieben in "Fuzzy extractors: How to generate strong keys from biometrics and other noisy data", Y. Dodis, L. Reyzin, A. Smith, "Advances in cryptology-Eurocrypt 2004, 2004, Seiten 523-540. Die gemeinsame Anwendung von PUF und einem Fuzzy Extractor ist beschrieben in "Performance Analysis for PUF Data Using Fuzzy Extractor", H. Kang, Y. Hori, T. Katashita, M. Hagiwara, K. Iwamura, Ubiquitous Information Technologies and Applications, Springer, 2014, Seiten 277-284.

Die Kombination einer PUF und eines Fuzzy Key Extractors ist auch in der WO 2015/180867 A1 gezeigt und betrifft das Erzeugen eines kryptographischen Schlüssels, eine Schlüsselerzeugungsvorrichtung sowie ein eingebettetes System zum Erzeugen eines kryptographischen Schlüssels unter Verwendung einer physikalisch unklonbaren Funktion.

US 2010/176920 A1 offenbart die Verwendung einer PUF und eines Fuzzy-Key-Extraktors, um kryptographische Schlüssel zu erzeugen und bei Bedarf zu rekonstruieren.

Physikalisch unklonbare Funktionen, sogenannte Physical Unclonable Functions (PUFs), sind bekannt, um Objekte zuverlässig anhand ihrer intrinsischen physikalischen Eigenschaften zu identifizieren. Eine physikalische Eigenschaft eines Gegenstandes, beispielsweise eines Halbleiter-Schaltkreises, wird dabei als individueller Fingerabdruck verwendet. Eine physikalisch unklonbare Funktion wird mit einer Eingabe (Challenge) beaufschlagt und liefert eine Antwort (Response), welche bei einem Nachbau des Gerätes bei Beaufschlagen mit der gleichen Challenge nicht generierbar ist. Eine Response ist nicht vorhersehbar und kann somit nicht - insbesondere auch nicht bei Kenntnis der Challenge - auf einem anderen oder nachgebautem Schaltkreis erzeugt werden. Somit kann eine Authentifizierung mittels der physikalisch unklonbaren Funktion erreicht werden, indem beispielsweise eine Response oder ein daraus abgeleiteter Wert, wie beispielsweise ein kryptographischer Schlüssel, nur generiert werden kann, falls ein Zugriff auf den vorgesehenen korrekten, unveränderten oder nicht manipulierten Schaltkreis mit der darauf implementierten physikalisch unklonbaren Funktion vorhanden ist.

Im Umfeld kryptographischer Security-Mechanismen ist die Verwendung physikalisch unklonbarer Funktionen vorgesehen, um ein Abspeichern eines kryptographischen Schlüssels in einem Speicher oder ein manuelles Eingeben des Schlüssels zu vermeiden. Das Erzeugen eines kryptographischen Schlüssels durch Beaufschlagen einer physikalisch unklonbaren Funktion mit einer Challenge stellt einen sicheren Schlüsselspeicher dar. Es ist bekannt, mittels eines Fuzzy Key Extractors unter Verwendung einer physikalisch unklonbaren Funktion einen kryptographischen Schlüssel zu extrahieren. Ein Fuzzy Key Extractor benötigt dafür Hilfsdaten, sogenannte Helper Data, welche beim Speichern eines Schlüssels erzeugt werden müssen. Die Hilfsdaten sind dabei auf dem Gerät hinterlegt, auf welchem ein Schlüssel unter Verwendung einer physikalisch unklonbaren Funktion erzeugt werden soll, also etwa im eingebetteten System. Die Hilfsdaten stellen dabei sicher, dass auch bei Bitfehlern, welche aufgrund von Alterung der Hardware oder aufgrund von schwankenden Umgebungsbedingungen oder aufgrund von statistischen Schwankungen kaum vermeidbar sind, immer der ursprünglich erzeugte Schlüssel reproduzierbar ist. Kryptographische Schlüssel, welche im eingebetteten System zur Freischaltung einer Funktionalität oder zum Entschlüsseln einer Firmware oder zum Absichern einer Kommunikation mit einem weiteren Gerät von dem Gerät verwendet werden sollen, werden im Klartext oder verschlüsselt oder obfusziert auf dem Gerät abgelegt.

### Darstellung der Erfindung

Es ist eine Aufgabe der vorliegenden Erfindung, ein Verfahren zum Verschlüsseln des Speicherinhalts eines Speichers in einem eingebetteten System unter Verwendung einer physikalischen unklonbaren Funktion sowie eines Fuzzy Key Extractors anzugeben.

Die gestellte Aufgabe wird durch ein Verfahren mit den Merkmalen des Patentanspruchs 1 gelöst.

Physikalisch unklonbare Funktionen sind ein Pendant zum biometrischen Fingerabdruck, aber für ein physikalisches Gerät (meist eine integrierte Schaltung bzw. einen Teil davon). Das Gerät verarbeitet Eingaben und berechnet daraus Ausgaben, wobei die Berechnung hochgradig von den physikalischen Eigenschaften des konkreten Exemplars des Gerätes abhängt, indem Fertigungsschwankungen sowie zufällige Unterschiede auf atomarer Ebene einbezogen werden. Die Berechnung ist daher nur mit demselben Gerät reproduzierbar. Dadurch sind physikalisch unklonbare Funktionen (PUFs) effizient verifizierbar, eindeutig und fälschungssicher.

Mit anderen Worten wird also erfindungsgemäß für jeden von mehreren zu verschlüsselnden Datensätzen ein eigener individueller Schlüssel erzeugt, in dem für jeden Datensatz eine eigene Zufallszahl generiert wird, diese als Eingabe (Challenge) an die gleiche physikalische unklonbare Funktion gesendet wird, die Antwort der physikalischen unklonbaren Funktion als Eingabe für den Fuzzy Key Extractor verwendet wird und dieser daraus den Schlüssel für den betreffenden Datensatz erstellt. Mit diesem Schlüssel wird dann dieser Datensatz verschlüsselt und in verschlüsselter Form abgespeichert. Für jeden zu verschlüsselnden Datensatz wird dieser Ablauf wiederholt.

Der jeweilige generierte Schlüssel wird aber nicht abgespeichert, da dies ja ein Sicherheitsrisiko darstellen würde. Stattdessen wird die jeweilige Zufallszahl, mit welcher der Schlüssel berechnet wurde, gespeichert, um den Schlüssel für die Entschlüsselung des jeweiligen Datensatzes wieder regenerieren zu können. Die Zufallszahl lässt keine Rückschlüsse auf die verschlüsselten Datensätze zu, deshalb muss die Zufallszahl nicht geschützt abgespeichert werden.

Ein zu verschlüsselnder Datensatz kann dabei nur eine Dateneinheit, wie ein Bit, ein Byte, ein Wort, ..., enthalten, oder auch mehrere dieser aufeinanderfolgenden Dateneinheiten.

Zur Vereinfachung der Datenoperationen beim Verschlüsseln und Entschlüsseln der Datensätze kann vorgesehen sein, dass die Zufallszahlen im selben Speicher abgespeichert werden wie die verschlüsselten Datensätze.

Zum geordneten Abspeichern der Zufallszahlen kann vorgesehen sein, dass eine Zufallszahl immer dem zugeordneten verschlüsselten Datensatz benachbart abgespeichert wird. Beim Entschlüsseln der einzelnen Datensätze ist daher die Zufallszahl (als Helper Data = Hilfsdatensatz für die physikalische unklonbare Funktion) zur Regenerierung des notwendigen Schlüssels leicht verfügbar.

Insbesondere kann eine Zufallszahl immer dem zugeordneten verschlüsselten Datensatz unmittelbar vorangehend abgespeichert sein, sodass keine Daten über den Speicherort der jeweiligen Zufallszahl abgespeichert werden müssen, sondern eine einzige Angabe zum Speicherort aussagt, wo sich Zufallszahl und zugehöriger verschlüsselter Datensatz befinden.

Es kann vorgesehen sein, dass zum Beschleunigen des Verschlüsselungsverfahrens vorab, also noch bevor ein zu verschlüsselnder Datensatz vorliegt, ein oder mehrere Schlüssel auf einmal erzeugt und gemeinsam mit der jeweils zugehörigen Zufallszahl in einem dynamischen Zwischenspeicher, z.B. in einer Cache-Tabelle, abgespeichert werden. Trifft dann ein zu verschlüsselnder Datensatz ein, kann dieser sofort mit einem Schlüssel aus dem Zwischenspeicher verschlüsselt und gemeinsam mit der zugehörigen Zufallszahl abgespeichert werden.

Zum Entschlüsseln der verschlüsselten Daten werden die gespeicherten Zufallszahlen verwendet, um den zugehörigen Schlüssel zu rekonstruieren, indem die gespeicherte Zufallszahl als Eingabe für die physikalische unklonbare Funktion verwendet wird und die Antwort der physikalischen unklonbaren Funktion als Eingabe für den Fuzzy Key Extractor verwendet wird. Die Ausgabe des Fuzzy Key Extractors stellt dann den wiederhergestellten Schlüssel dar, mit dem der Datensatz entschlüsselt werden kann.

Ein Computersystem zur Durchführung des erfindungsgemäßen Verfahrens umfasst zumindest einen Speicher, eine physikalische unklonbare Funktion sowie einen Fuzzy Key Extractor, und einen Zufallsgenerator, wobei der physikalische Zufallsgenerator mit der physikalischen unklonbaren Funktion und dem Fuzzy Key Extractor verbunden ist, und wobei der physikalische Zufallsgenerator, die physikalische unklonbare Funktion und der Fuzzy Key Extractor so ausgestaltet sind,
- dass als Eingabe, in Form eines ersten Hilfsdatensatzes, für die physikalische unklonbare Funktion eine erste Zufallszahl durch einen physikalischen Zufallsgenerator erzeugt wird,
- dass die Antwort der physikalischen unklonbaren Funktion als Eingabe für den Fuzzy Key Extractor verwendet wird, der aus der Antwort einen ersten Schlüssel erzeugt,
- dass mit dem ersten Schlüssel ein erster Datensatz, bestehend aus einer oder mehreren aufeinander folgenden Dateneinheiten, verschlüsselt und im Speicher abgespeichert wird, und
- dass für einen zweiten Datensatz, bestehend aus einer oder mehreren aufeinander folgenden Dateneinheiten und auf den ersten Datensatz folgend, auf die gleiche Weise ein zweiter Schlüssel aus einer zweiten Zufallszahl erzeugt wird, und der zweite Datensatz mit dem so erzeugten zweiten Schlüssel verschlüsselt und im Speicher abgespeichert wird.

Das erfindungsgemäße Computersystem kann als anwendungsspezifische, integrierte Schaltung (ASIC) ausgeführt sein. Es kann aber auch als sogenanntes Field Programmable Gate Array (FPGA) ausgeführt sein, also als integrierter Schaltkreis (IC) der Digitaltechnik, in den eine logische Schaltung programmiert werden kann. In beiden Fällen kann das erfindungsgemäße Computersystem als Ein-Chip-System oder System-on-Chip (SoC) hergestellt werden.

Da zur Durchführung des erfindungsgemäßen Verfahrens Anweisungen an einen Prozessor des eingebetteten Systems notwendig sind, umfasst die gegenständliche Erfindung auch ein Computerprogrammprodukt, welches ein Programm umfasst, das direkt in einen Prozessor eines eingebetteten Systems ladbar ist, mit Programm-Mitteln, um alle Schritte des erfindungsgemäßen Verfahrens auszuführen, wenn das Programm vom Prozessor ausgeführt wird.

Das erfindungsgemäße Verfahren stellt einen sehr wirksamen Schutzmechanismus auf Basis physikalischer unklonbarer Funktionen zur Verfügung, der zur Verschlüsselung besonders wichtiger Informationen verwendet werden kann, die gespeichert werden sollen. Das Verfahren benötigt selbst aber jedenfalls Rechenzeit, sodass es am besten nur zur Verschlüsselung von solchen Speicherbereichen verwendet werden soll, die hochsensible Information enthalten.

Mit dem erfindungsgemäßen Verfahren kann eine sehr starke, nur für das spezifische eingebettete System geltende Verschlüsselung von Speicherinhalt zur Verfügung gestellt werden. Jeder Datensatz wird mit einem einzigartigen Schlüssel verschlüsselt, der aus einer Zufallszahl und einer für dieses eingebettete System spezifischen PUF-Signatur gebildet wird. Für eine etwaige Seitenkanalattacke, wie eine Differential Power Analysis (DPA), sind der Mess- und Rechenaufwand sehr hoch, weil selbst durch die erfolgreiche Berechnung eines Schlüssels nur ein Datensatz des Speichers entschlüsselt werden kann, und nicht der gesamte Speicherinhalt.

### Kurzbeschreibung der Figuren

Zur weiteren Erläuterung der Erfindung wird im nachfolgenden Teil der Beschreibung auf die Figuren Bezug genommen, aus denen weitere vorteilhafte Ausgestaltungen, Einzelheiten und Weiterbildungen der Erfindung zu entnehmen sind. Die Figuren sind beispielhaft zu verstehen und sollen den Erfindungscharakter zwar darlegen, ihn aber keinesfalls einengen oder gar abschließend wiedergeben. Es zeigt
- Fig. 1: ein Blockdiagramm eines Teils eines erfindungsgemäßen Computersystems,
- Fig. 2: die Datenstruktur der erfindungsgemäß zur verarbeitenden Daten.

### Ausführung der Erfindung

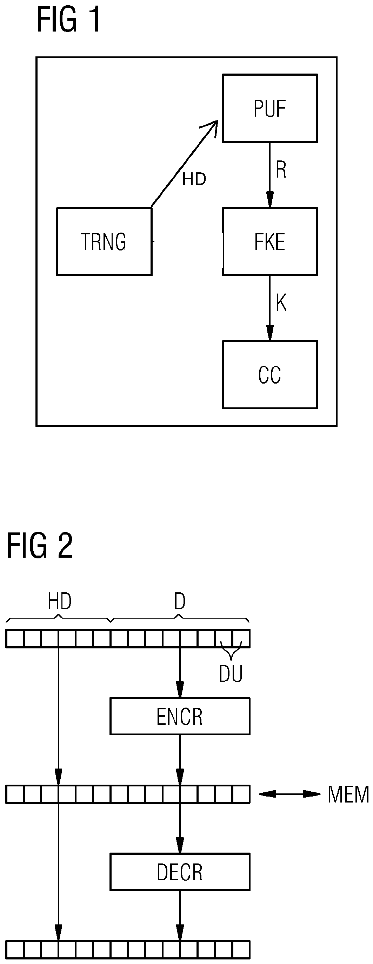

Fig. 1 zeigt ein Blockdiagramm eines Teils eines erfindungsgemäßen Computersystems. Für das Computersystem sind in der Figur für die Erfindung wesentliche Einheiten dargestellt, nämlich eine physikalische unklonbare Funktion PUF, ein Fuzzy Key Extractor FKE, ein Zufallszahlengenerator TRNG und ein Prozessor CC. Es kann und wird in der Regel darüber hinaus weitere Einheiten, wie weitere Prozessoren, Ein-/Ausgabeeinheiten, Controller, zusätzliche Schnittstellen, Speicher, etc. enthalten. Zumindest ist im erfindungsgemäßen Computersystem ein Speicher MEM (siehe Fig. 2) vorhanden, wo die verschlüsselten Datensätze abgespeichert werden.

Der Zufallszahlengenerator TRNG (True Random Number Generator) ist ein physikalischer Zufallszahlengenerator und benutzt dafür physikalische Prozesse. Hierbei werden beispielsweise Impulsschwankungen elektronischer Schaltungen (z. B. thermisches Rauschen eines Widerstands) ausgenutzt. Generell können alle natürlichen Quellen verwendet werden, die auf physikalischen Effekten basieren und eine recht hohe Güte liefern, aber auch andere asynchrone Quellen, wie z. B. Atmosphärenrauschen, CCD-Sensorrauschen, die Schwankung der tatsächlichen Zeitdauer einer mit einem Zeitgeber ("Timer") gemessenen Zeitdauer oder Spannungsschwankungen an einer Zenerdiode.

Der zu verschlüsselnde Datenstrom gelangt nun unverschlüsselt in den Prozessor CC, der hier als sogenannter Crypto Core ausgebildet ist, also als besonders gegen äußere Angriffe abgesicherter Prozessor. Statt eines so abgesicherten Prozessors CC kann aber ein Crypto Core auch einfach durch ein Hardware-Modul verwirklicht sein, welches nur eine Veroder Entschlüsselung ausführen kann. Wenn der zu verschlüsselnde Datenstrom in den Crypto Core gelangt, wird der Datenstrom in einzelne Datensätze zerlegt, und immer ein Datensatz wird mit dem gleichen Schlüssel auf einmal, also alle Dateneinheiten des Datensatzes gemeinsam, verschlüsselt. Für den ersten zu verschlüsselnden Datensatz wird durch den Zufallszahlengenerator TRNG eine erste Zufallszahl HD erstellt, die als Hilfsdatensatz (Helper Data) als Eingabe (Challenge) an die physikalische unklonbare Funktion PUF gesendet wird. Die Antwort (Response) R der physikalischen unklonbaren Funktion PUF, also der sogenannte Fingerprint des entsprechenden Schaltkreises, wird als Eingabe an den Fuzzy Key Extractor FKE gesendet, der aus der Antwort einen ersten Schlüssel K erzeugt und zum Verschlüsseln des ersten Datensatzes an den Prozessor CC sendet.

Dabei werden neben dem Schlüssel K und dem zu verschlüsselnden Datensatz D auch die zugehörige Zufallszahl HD an den Prozessor CC gesendet, wie dies in Fig. 2 dargestellt ist. Es gelangt somit ein um die Zufallszahl HD erweiterter Datensatz in den Prozessor CC, wobei nur der zu verschlüsselnden Datensatz D mit dem Verschlüsselungsprogramm ENCR verschlüsselt wird. Im vorliegenden Beispiel umfasst die Zufallszahl HD 6 Bit an Dateneinheiten DU, der zu verschlüsselnde Datensatz D 8 Bit, also 8 Dateneinheiten DU. Die verschlüsselten Daten werden gemeinsam mit der nicht verschlüsselten Zufallszahl HD, sozusagen wieder als erweiterter Datensatz, wo Zufallszahl HD und verschlüsselte Daten unmittelbar aufeinander folgen, nun in einen Speicher MEM des eingebetteten Systems geschrieben. Zum Entschlüsseln wird der verschlüsselte Datensatz gemeinsam mit der nicht verschlüsselten Zufallszahl HD wieder aus dem Speicher MEM in den Prozessor CC geladen und der verschlüsselte Datensatz wird mittels Entschlüsselungsprogramm DECR entschlüsselt. Dazu wird die Zufallszahl HD an die physikalische unklonbare Funktion PUF als Eingabe gesendet und aus der Antwort der physikalischen unklonbaren Funktion PUF wird mittels Fuzzy Key Extractor FKE der Schlüssel K regeneriert, der für die Entschlüsselung benötigt wird. Das Ergebnis nach dieser Operation ist wieder ein erweiterter Datensatz, bestehend aus der Zufallszahl HD und dem auf die Zufallszahl folgenden Datensatz D.

Für den zweiten (und jeden weiteren) Datensatz wird durch den Zufallszahlengenerator TRNG eine weitere Zufallszahl HD erstellt, die sich in der Regel von der ersten Zufallszahl unterscheidet. Die zweite Zufallszahl HD wird wieder als Hilfsdatensatz (Helper Data) als Eingabe (Challenge) an die physikalische unklonbare Funktion PUF gesendet wird. Die Antwort (Response) R der physikalischen unklonbaren Funktion PUF wird als Eingabe an den Fuzzy Key Extractor FKE gesendet, der aus der Antwort einen zweiten Schlüssel K erzeugt und zum Verschlüsseln des zweiten Datensatzes an den Prozessor CC sendet. Dabei werden neben dem Schlüssel K und dem zu verschlüsselnden zweiten Datensatz D auch die zugehörige zweite Zufallszahl HD an den Prozessor CC gesendet, siehe wieder Fig. 2. Es gelangt somit ein um die zweite Zufallszahl HD erweiterter Datensatz in den Prozessor CC, wobei nur der zu verschlüsselnden zweite Datensatz D mit dem Verschlüsselungsprogramm ENCR verschlüsselt wird. Die verschlüsselten Daten werden gemeinsam mit der nicht verschlüsselten zweiten Zufallszahl HD, sozusagen wieder als erweiterter Datensatz, nun ebenfalls im Speicher MEM des eingebetteten Systems abgespeichert. Zum Entschlüsseln wird der verschlüsselte zweite Datensatz gemeinsam mit der nicht verschlüsselten zweiten Zufallszahl HD wieder aus dem Speicher MEM in den Prozessor CC geladen und der verschlüsselte Datensatz wird mittels Entschlüsselungsprogramm DECR entschlüsselt. Dazu wird die zweite Zufallszahl HD an die physikalische unklonbare Funktion PUF als Eingabe gesendet und aus der Antwort der physikalischen unklonbaren Funktion PUF wird mittels Fuzzy Key Extractor FKE der zweite Schlüssel K regeneriert, der für die Entschlüsselung benötigt wird. Das Ergebnis nach dieser Operation ist wieder ein erweiterter Datensatz, bestehend aus der zweiten Zufallszahl HD und dem zweiten Datensatz D.

Für jeden weiteren zu verschlüsselnden Datensatz werden wieder eine eigene Zufallszahl und ein eigener Schlüssel erzeugt, wie für den ersten und den zweiten Datensatz beschrieben. Um im Falle einer Verschlüsselung bereits einen Schlüssel zur Verfügung zu haben, können Schlüssel K aus Zufallszahlen HD bereits auf Vorrat berechnet werden, etwa, wenn der Prozessor CC gerade nicht ausgelastet ist. Die so erzeugten Schlüssel-Zufallszahlenpaare können dabei in einem eigenen (abgesicherten) Cache in Form einer Tabelle abgespeichert werden und sofort, wenn ein zu verschlüsselnder Datensatz einlangt, wird ein abgespeichertes Schlüssel-Zufallszahlenpaar gemeinsam mit dem zu verschlüsselnden Datensatz an den Prozessor CC gesendet, der sofort das Verschlüsselungsprogramm ENCR starten kann, ohne auf die Erstellung eines Schlüssels durch die physikalische unklonbare Funktion PUF und den Fuzzy Key Extractor FKE warten zu müssen.

Selbstverständlich können im Zuge der Schlüsselerstellung und/oder beim Verschlüsseln und/oder beim Entschlüsseln die Schlüssel und/oder Daten einer Fehlerkorrektur unterzogen werden.

### Bezugszeichenliste:

- CC: Prozessor (Crypto Core)
- D: Datensatz
- DU: Dateneinheit
- DECR: Entschlüsselungsprogramm (Decryption)
- ENCR: Verschlüsselungsprogramm (Encryption)
- FKE: Fuzzy Key Extractor
- HD: Zufallszahl (=Hilfsdatensatz = Helper Data)
- K: Schlüssel
- MEM: Speicher
- PUF: physikalisch unklonbare Funktion
- R: Antwort
- TRNG: Zufallszahlengenerator

## Patentansprüche

1. Verfahren zum Verschlüsseln des Speicherinhalts eines Speichers (MEM) in einem eingebetteten System, wobei unter Verwendung einer physikalischen unklonbaren Funktion (PUF) sowie eines Fuzzy Key Extractors (FKE) des eingebetteten Systems ein geheimer Schlüssel (K) erzeugt wird, **dadurch gekennzeichnet,**
- **dass** für einen ersten zu verschlüsselnden Datensatz (D), bestehend aus einer oder mehreren aufeinander folgenden Dateneinheiten (DU), durch einen physikalischen Zufallsgenerator (TRNG) eine erste Zufallszahl (HD) erzeugt wird, welche als Eingabe, in Form eines ersten Hilfsdatensatzes, an die physikalische unklonbare Funktion (PUF) gesendet wird,
- **dass** die Antwort (R) der physikalischen unklonbaren Funktion (PUF) als Eingabe für den Fuzzy Key Extractor (FKE) verwendet wird, der aus der Antwort (R) einen ersten Schlüssel (K) erzeugt,
- **dass** mit dem ersten Schlüssel (K) der erste zu verschlüsselnde Datensatz (D) verschlüsselt wird; dass der verschlüsselte erste Datensatz und die erste Zufallszahl (HD)im Speicher (MEM) abgespeichert werden,
- **dass** für einen zweiten zu verschlüsselten Datensatz (D), bestehend aus einer oder mehreren aufeinander folgenden Dateneinheiten (DU) und auf den ersten Datensatz (D) folgend, auf die gleiche Weise ein zweiter Schlüssel (K) aus einer zweiten Zufallszahl (HD) erzeugt wird, wobei die zweite Zufallszahl (HD) ebenfalls durch den physikalischen Zufallsgenerator (TRNG) erzeugt wird, und der zweite zu verschlüsselnde Datensatz mit dem so erzeugten zweiten Schlüssel verschlüsselt wird und der verschlüsselte zweite Datensatz und die zweite Zufallszahl (HD) im Speicher (MEM) abgespeichert werden.

2. Verfahren nach Anspruch 1, **dadurch gekennzeichnet, dass** die Zufallszahlen (HD) im selben Speicher (MEM) abgespeichert werden wie die verschlüsselten Datensätze.

3. Verfahren nach Anspruch 1 oder 2, **dadurch gekennzeichnet, dass** eine Zufallszahl (HD) immer dem zugeordneten verschlüsselten Datensatz benachbart abgespeichert wird.

4. Verfahren nach Anspruch 3, **dadurch gekennzeichnet, dass** eine Zufallszahl (HD) immer dem zugeordneten verschlüsselten Datensatz unmittelbar vorangehend abgespeichert wird.

5. Verfahren nach einem der vorgehenden Ansprüche, **dadurch gekennzeichnet, dass** vorab, noch bevor ein zu verschlüsselnder Datensatz (D) vorliegt, ein oder mehrere Schlüssel (K) auf einmal erzeugt und gemeinsam mit der jeweils zugehörigen Zufallszahl (HD) in einem dynamischen Zwischenspeicher abgespeichert werden.

6. Verfahren nach einem der vorgehenden Ansprüche, **dadurch gekennzeichnet, dass** zum Entschlüsseln der verschlüsselten Daten die gespeicherten Zufallszahlen (HD) verwendet werden, um den zugehörigen Schlüssel (K) zu rekonstruieren, indem die gespeicherte Zufallszahl (HD) als Eingabe für die physikalische unklonbare Funktion (PUF) verwendet wird und die Antwort der physikalischen unklonbaren Funktion (PUF) als Eingabe für den Fuzzy Key Extractor (FKE) verwendet wird.

7. Computersystem zur Durchführung des Verfahrens nach einem der Ansprüche 1 bis 6, umfassend zumindest einen Speicher (MEM), eine physikalische unklonbare Funktion (PUF) sowie einen Fuzzy Key Extractor (FKE), **dadurch gekennzeichnet, dass** ein physikalischer Zufallsgenerator (TRNG) mit der physikalischen unklonbaren Funktion (PUF) und dem Fuzzy Key Extractor (FKE) verbunden ist, wobei der physikalische Zufallsgenerator (TRNG), die physikalische unklonbare Funktion (PUF) und der Fuzzy Key Extractor (FKE) so ausgestaltet sind,
- dass für einen ersten zu verschlüsselnden Datensatz (D), bestehend aus einer oder mehreren aufeinander folgenden Dateneinheiten (DU), durch einen physikalischen Zufallsgenerator (TRNG) eine erste Zufallszahl (HD) erzeugt wird, welche als Eingabe, in Form eines ersten Hilfsdatensatzes, an die physikalische unklonbare Funktion (PUF) gesendet wird,
- dass die Antwort (R) der physikalischen unklonbaren Funktion (PUF) als Eingabe für den Fuzzy Key Extractor (FKE) verwendet wird, der aus der Antwort (R) einen ersten Schlüssel (K) erzeugt,
- dass mit dem ersten Schlüssel (K) der zu verschlüsselnde erste Datensatz (D) verschlüsselt wird und der verschlüsselte erste Datensatz und die erste Zufallszahl im Speicher (MEM) abgespeichert werden, und
- dass für einen zu verschlüsselnden zweiten Datensatz (D), bestehend aus einer oder mehreren aufeinander folgenden Dateneinheiten (DU) und auf den ersten Datensatz folgend, auf die gleiche Weise ein zweiter Schlüssel (K) aus einer zweiten Zufallszahl (HD) erzeugt wird, wobei die zweite Zufallszahl (HD) ebenfalls durch den physikalischen Zufallsgenerator (TRNG) erzeugt wird, und der zweite zu verschlüsselnde Datensatz (D) mit dem so erzeugten zweiten Schlüssel verschlüsselt wird und der verschlüsselte zweite Datensatz und die zweite Zufallszahl (HD) im Speicher (MEM) abgespeichert werden.

8. Computerprogrammprodukt, welches ein Programm umfasst, das direkt in einen Prozessor (CC) eines eingebetteten Systems ladbar ist, mit Programm-Mitteln, um alle Schritte des Verfahrens nach einem der Ansprüche 1 bis 6 auszuführen, wenn das Programm vom Prozessor (CC) ausgeführt wird.

## Claims

1. Method for encrypting the memory content of a memory (MEM) in an embedded system, wherein a physical unclonable function (PUF) and a fuzzy key extractor (FKE) of the embedded system are used to generate a secret key (K), **characterized in that**
- for a first dataset (D) to be encrypted, consisting of one or more consecutive data units (DU), a first random number (HD) is generated by a true random number generator (TRNG), said first random number being sent as an input, in the form of a first helper dataset, to the physical unclonable function (PUF),
- the response (R) of the physical unclonable function (PUF) is used as an input for the fuzzy key extractor (FKE), which generates a first key (K) from the response (R),
- the first dataset (D) to be encrypted is encrypted with the first key (K), the encrypted first dataset and the first random number (HD) are stored in the memory (MEM),
- for a second dataset (D) to be encrypted, consisting of one or more consecutive data units (DU) and following the first dataset (D), a second key (K) is generated in the same way from a second random number (HD), wherein the second random number (HD) is also generated by the true random number generator (TRNG), and the second dataset to be encrypted is encrypted with the second key that has been generated in this way, and the encrypted second dataset and the second random number (HD) are stored in the memory (MEM).

2. Method according to Claim 1, **characterized in that** the random numbers (HD) are stored in the same memory (MEM) as the encrypted datasets.

3. Method according to Claim 1 or 2, **characterized in that** a random number (HD) is always stored adjacent to the associated encrypted dataset.

4. Method according to Claim 3, **characterized in that** a random number (HD) is always stored so as to immediately precede the associated encrypted dataset.

5. Method according to one of the preceding claims, **characterized in that** initially, before there is even a dataset (D) to be encrypted, one or more keys (K) are generated at the same time and are stored, together with the respective associated random number (HD), in a dynamic buffer memory.

6. Method according to one of the preceding claims, **characterized in that,** in order to decrypt the encrypted data, the stored random numbers (HD) are used to reconstruct the associated key (K) by using the stored random number (HD) as an input for the physical unclonable function (PUF) and using the response of the physical unclonable function (PUF) as an input for the fuzzy key extractor (FKE).

7. Computer system for carrying out the method according to one of Claims 1 to 6, comprising at least one memory (MEM), a physical unclonable function (PUF) and a fuzzy key extractor (FKE), **characterized in that** a true random number generator (TRNG) is connected to the physical unclonable function (PUF) and to the fuzzy key extractor (FKE), wherein the true random number generator (TRNG), the physical unclonable function (PUF) and the fuzzy key extractor (FKE) are designed such that
- for a first dataset (D) to be encrypted, consisting of one or more consecutive data units (DU), a first random number (HD) is generated by a true random number generator (TRNG), said first random number being sent as an input, in the form of a first helper dataset, to the physical unclonable function (PUF),
- the response (R) of the physical unclonable function (PUF) is used as an input for the fuzzy key extractor (FKE), which generates a first key (K) from the response (R),
- the first dataset (D) to be encrypted is encrypted with the first key (K), and the encrypted first dataset and the first random number are stored in the memory (MEM), and
- for a second dataset (D) to be encrypted, consisting of one or more consecutive data units (DU) and following the first dataset, a second key (K) is generated in the same way from a second random number (HD), wherein the second random number (HD) is also generated by the true random number generator (TRNG), and the second dataset (D) to be encrypted is encrypted with the second key that has been generated in this way, and the encrypted second dataset and the second random number (HD) are stored in the memory (MEM).

8. Computer program product comprising a program that is able to be loaded directly into a processor (CC) of an embedded system, having program means for carrying out all the steps of the method according to one of Claims 1 to 6 when the program is executed by the processor (CC).

## Revendications

1. Procédé de chiffrement du contenu d'une mémoire (MEM) dans un système intégré, dans lequel une clé secrète (K) est générée à l'aide d'une fonction non clonable physique (PUF) et d'un extracteur de clé floue (FKE) du système intégré, **caractérisé**
- **en ce que**, pour un premier ensemble de données à chiffrer (D), constitué d'une ou de plusieurs unités de données (DU) successives, un premier nombre aléatoire (HD) est généré par un générateur aléatoire physique (TRNG), lequel nombre est envoyé comme entrée à la fonction non clonable physique (PUF), sous forme d'un premier ensemble de données auxiliaires,
- **en ce que** la réponse (R) de la fonction non clonable physique (PUF) est utilisée comme entrée pour l'extracteur de clé flou (FKE), qui génère une première clé (K) à partir de la réponse (R),
- **en ce que** le premier ensemble de données à chiffrer(D)est chiffré avec la première clé (K) ;
**en ce que** le premier ensemble de données chiffré et le premier nombre aléatoire (HD) sont stockés dans la mémoire (MEM),
- **en ce que**, pour un second ensemble de données à chiffrer (D), constitué d'une ou de plusieurs unités de données successives (DU) et suivant le premier ensemble de données (D), une seconde clé (K) est générée de la même manière à partir d'un second nombre aléatoire (HD), dans lequel le second nombre aléatoire (HD) est également généré par le générateur aléatoire physique (TRNG), et le second ensemble de données à chiffrer est chiffré avec la seconde clé ainsi générée et le second ensemble de données chiffré et le second nombre aléatoire (HD) sont stockés dans la mémoire (MEM).

2. Procédé selon la revendication 1, **caractérisé en ce que** les nombres aléatoires (HD) sont stockés dans la même mémoire (MEM) que les ensembles de données chiffrés.

3. Procédé selon la revendication 1 ou 2, **caractérisé en ce qu'un** nombre aléatoire (HD) est toujours stocké à côté de l'ensemble de données chiffré affecté.

4. Procédé selon la revendication 3, **caractérisé en ce qu'un** nombre aléatoire (HD) est toujours stocké immédiatement avant l'ensemble de données chiffré affecté.

5. Procédé selon l'une des revendications précédentes, **caractérisé en ce qu'**une ou plusieurs clés (K) sont générées en une seule fois et sont stockées dans une mémoire tampon dynamique avec le nombre aléatoire (HD) correspondant avant qu'un ensemble de données (D) à chiffrer ne soit disponible.

6. Procédé selon l'une des revendications précédentes, **caractérisé en ce que** les nombres aléatoires (HD) stockés sont utilisés pour déchiffrer les données chiffrées afin de reconstituer la clé (K) correspondante en utilisant le nombre aléatoire stocké (HD) comme entrée pour la fonction non clonable physique (PUF) et la réponse de la fonction non clonable physique (PUF) comme entrée pour l'extracteur de clé floue (FKE).

7. Système informatique pour la mise en oeuvre du procédé selon l'une des revendications 1 à 6, comprenant au moins une mémoire (MEM), une fonction non clonable physique (PUF) et un extracteur de clé floue (FKE), **caractérisé en ce qu'**un générateur aléatoire physique (TRNG) est relié à la fonction non clonable physique (PUF) et à l'extracteur de clé floue (FKE), dans lequel le générateur aléatoire physique (TRNG), la fonction non clonable physique (PUF) et l'extracteur de clé floue (FKE) sont conçus de sorte que
- pour un premier ensemble de données à chiffrer (D), constitué d'une ou de plusieurs unités de données (DU) successives, un premier nombre aléatoire (HD) est généré par un générateur aléatoire physique (TRNG), qui est envoyé comme entrée à la fonction non clonable physique (PUF), sous forme d'un premier ensemble de données auxiliaires,
- la réponse (R) de la fonction non clonable physique (PUF) est utilisée comme entrée pour l'extracteur de clé flou (FKE), qui génère une première clé (K) à partir de la réponse (R),
- le premier ensemble de données à chiffrer (D) est chiffré avec la première clé (K), et que le premier ensemble de données chiffré et le premier nombre aléatoire sont stockés dans la mémoire (MEM), et
- pour un second ensemble de données à chiffrer (D), constitué d'une ou de plusieurs unités de données successives (DU) et suivant le premier ensemble de données, une seconde clé (K) est générée de la même manière à partir d'un second nombre aléatoire (HD), dans lequel le second nombre aléatoire (HD) est également généré par le générateur aléatoire physique (TRNG), et le second ensemble de données (D) à chiffrer est chiffré avec la seconde clé ainsi générée et le second ensemble de données chiffré et le second nombre aléatoire (HD) sont stockés dans la mémoire (MEM).

8. Produit de programme informatique qui comprend un programme chargeable directement dans un processeur (CC) d'un système intégré, avec des moyens de programmation pour réaliser toutes les étapes du procédé selon l'une des revendications 1 à 6, lorsque le programme est réalisé par le processeur (CC).
